# EUROPEAN PATENT APPLICATION

(11) **EP 2 452 570 A1**
(43) Date of publication of application: **16.05.2012**
(21) Application number: 10191113.9
(22) Date of filing: 12.11.2010
(51) Int. Cl.: A23L 1/0532, A23L 1/054

(54) **Gel composition**

(71) Applicant: Nestec S.A., 1800 Vevey (CH)
(72) Inventor: Lagarrigue, Sophie, 78462, KONSTANZ (DE); Grassi Heitz, Sabrina, 8304, WALLISELLEN (CH); Tolea, Andreea, 78462, KONSTANZ (DE)

(57) **Abstract**

A composition in the form of a gel for preparing a food product, the composition comprising water, flavourings, salt and gelling agents, where the gelling agents comprise at least iota-carrageenan and xanthan.

## Description

### TECHNICAL FIELD

This invention relates to a gel composition for preparing a food product and to a process for preparing a food product. In particular, the invention relates to a heat-reversible gel composition comprising both iota-carrageenan and xanthan as gelling agents for preparing savoury gelled food products.

### BACKGROUND

Concentrated food products such as bouillon or stock cubes have been known for many years. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products based on a single hydrocolloid gelling agent usually do not exhibit all the characteristics needed for an easy to use food concentrate product. Thus, two-component hydrocolloid based gel systems have been developed. These each have their characteristics which may make them suitable for some food applications, but not others.

Gelatin is commonly used in the food industry to produce gelled savoury products such as aspics. Vegetarian alternatives to gelatin have been developed over many years, with carrageenans being one of the most used replacers for gelatin especially in sweet products such as jellies. In savoury products, carrageenans are mainly used as thickeners or stabilizers, for example in salad dressings, as well in meat based products in which they can also be used for their gelling properties. In those applications though, heat reversibility is not a desired feature. However, there is a drawback to extending the use of carrageenans to some gelled food products. Carrageenans are generally used in food products that have a low salt concentration, typically 1-3%. For products having a high salt content, gelling and melting temperatures dramatically increase making the gels difficult to melt when reheated or dissolve in hot water. Carrageenans are also prone to syneresis when a high amount of salt is added. For these reasons, carrageenans have not previously been considered as gelling agents for high salt content food products.

Attempts have been previously made to find improved gelling ingredients that are suitable for concentrated food products. Combinations of two hydrocolloid polysaccharides have been found to exhibit suitable gelling properties. For example, WO 2007/068484 and WO 2008/151850, WO 2008/151851 and WO 2008/151852 describe a combination of xanthan and various galactomannans (locust bean gum, tara gum, guar gum or cassia gum) as a gelling agent. One problem with these combinations is that when increasing the salt content of the food product, the dosage of the gelling agent needs to be increased since the gel loses strength as the salt content is increased. There is a need for a gelling agent composition which is stable or has increased gel strength when salt content is increased enabling the production of a more consistent product over a wide range of salt concentrations. Another problem is that theses combinations, when used to make a soup or sauce, are still able to form a gel very quickly during cooling. This can lead to an undesired texture for consumption of the product when the dish is cooling. There is therefore a need for a gelling agent composition which does not gel during the normal food consumption times.

WO 2008/151852, describing the use of xanthan and cassia gum, presents the drawback that cassia gum is not available in the quantities required for industrial production in food grade quality, or is very expensive. Furthermore the regulatory status of cassia gum is still not clear in many countries, making its usage in industrial products very difficult.

A combination of gelatin and starch is described in WO 2007/068402 and WO 2007/068483. The main problem with this combination is that a very high dosage of gelling agent is needed (greater than 10 %). Also, gelatin is not popular as a food ingredient with those on a vegetarian diet.

JP 2001-258517 describes the use of agar, xanthan and locust bean gum. The possible use of carrageenan instead of xanthan and locust bean gum is also mentioned. But this gelling composition suffers from the problem that the composition cannot be melted quickly when reheated and added to hot water. An easy melting gel is an important characteristic desirable for concentrated food products.

It has now been found that a combination of iota-carrageenan and xanthan has certain desirable and surprising characteristics.

An object of the present invention is therefore to provide a gel composition that at least goes part way to overcoming one or more of the above disadvantages of existing gel compositions or at least provides a useful alternative.

### SUMMARY OF THE INVENTION

In a first aspect of the invention there is provided a composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.2 to 5 % (by weight of the total composition),
wherein the gelling agents comprise at least iota-carrageenan and xanthan.

The amount of gelling agents in the composition may preferably be 0.6 to 2 %. The ratio of iota-carrageenan and xanthan is preferably in the range of 70:30 to 30:70, but more preferably in the range 50:50 to 60:40. The gelling agents may further comprise starch or another carrageenan type.

The composition may also comprise fat, preferably in the amount of 1 to 10 %. Maltodextrin or glucose syrup in the amount of up to 40 % may also be included. The amount of water is preferably in the range 40 to 60 %, more preferably 45 to 60 %. Flavorings are included in the composition typically in the amount of 1 to 30%, preferably 5 to 15%.

In preferred embodiments of the invention, the composition is adapted to be heat reversible, meaning that it melts when reheated to a temperature above 75 °C and dissolves when added to boiling water in less than 2 minutes.

The composition of the invention may be used to prepare any suitable food product, especially sauces, soups, stocks, bouillons or gravies.

In a second aspect of the invention there is provided a process for preparing a composition in the form of a gel for preparing a food product comprising the steps:
a) heating water,
b) adding gelling agents including at least iota-carrageenan and xanthan, and mixing,
c) heating to a temperature of at least 70 °C, preferably at least 80 °C,
d) adding salt and flavourings, and mixing,
e) heating at a temperature of at least 75 °C, preferably at least 80 °C, to pasteurize, and
f) cooling to room temperature to form the gel.

The process may further comprising making a premix of the gelling agents with maltodextrin or glucose syrup and/or starch. The process may also comprise adding fat after mixing of the gelling agents.

In another aspect of the invention there is provided a use of the composition of the invention for preparing a food product, such as a sauce, soup, stock, soup base, bouillon or gravy.

### DETAILED DESCRIPTION

There is a need for a composition for preparing a food product having the texture of a gel and which is able to withstand high salt contents. The gel-forming composition should be able to set and melt reversibly. The melting temperature should be in a range allowing the composition to melt easily during a standard heating step or to allow dilution of the gel composition in hot water. There is further a need for a gel composition for preparing a food product that is stable during transportation and storage, and shows a low syneresis during storage typically for a few weeks or even up to several months.

It has now been found that these benefits may be achieved at least in part by a gel composition for preparing a food product comprising: 30 to 70 % water, 10 to 25 % salt, and 0.2 to 5 % gelling agents, wherein the gelling agents comprises at least iota-carrageenan and xanthan. In addition, the composition comprises 1 to 40 % of other ingredients typically encountered in savoury products such as flavourings (for example, flavouring agents, taste enhancing ingredients, herbs, spices, vegetables, meat and fish components (in liquid or powder form), lipids, and carbohydrates or mixtures thereof. All percentages are based on weight of the total composition.

The term "gel", in the context of this invention, means a solid or semi-solid matrix formed by interaction with one or more polysaccharides and water, which is free standing over a time scale of at least a few minutes and which deforms partially in an elastic way when submitted to a deformation force.

The term "rupture strength" is used in reference to gel strength and relates to the deformation force needed to break the gel. The rupture strength of a gel should be at least 20 g, but preferably greater than 35 g, as measured using a Texture Analyser.

The term "heat reversible" indicates a gelling agent composition that is liquid at elevated temperatures, forms a gel during cooling to room temperature and melts again when reheated.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable.

The term "carrageenan" refers to a family of linear sulfated polysaccharides which are usually extracted from red seaweeds. All carrageenans are high molecular weight polysaccharides made up of repeating galactose units and 3,6 anhydrogalactose, both sulfated and non-sulfated. The units are joined by alternating alpha 1-3 and beta 1-4 glycosidic linkages. Various types of carrageenans exist. Their structures differ in 3,6 anhydrogalactose and ester sulphate content. The main types are kappa, lambda and iota. Iota-carrageenan forms gels in the presence of cations, and therefore its behaviour is strongly dependent on salt content. Gelling temperature increases when salt concentration increases. Carrageenans gels are usually heat reversible, showing a small hysteresis between the gelling and melting temperature. When salt content increases, gelling and melting temperature can be as high as 90-95 °C making it difficult to dissolve easily in hot water. Iota carrageenan also shows syneresis in the presence of salt.

As used in the context of this invention, "iota-carrageenan" means any carrageenan or mix of carrageenans having a predominance of iota-carrageenan structural units.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group. Xanthan shows very high compatibility with salts, for example up to 25 %, and provides high elasticity.

The term "flavourings", as used in this specification, includes flavouring agents, taste enhancing ingredients, herbs, spices, vegetables, fruits, meat, fish, crustaceans or particulates thereof.

The composition may comprise further ingredients selected from carbohydrates, lipids, or mixtures thereof. The lipids may be provided by oils, creamer, vegetable or animal fats, cream and any traditional ingredients used in the manufacture of savoury food compositions. Carbohydrates may be provided by sugars, starches, flours, maltodextrins, glucose syrups etc.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

The inventors of the present invention have surprisingly found that combining xanthan with iota-carrageenan reduces the dissolution time of the gel when added to hot water and enables the gel to melt when reheated to temperatures above 75 °C. Further, combining xanthan with iota-carrageenan enables modulation of the texture of a pure carrageenan gel (providing increased elasticity) and also reduces the syneresis normally observed with carrageenan gels.

The concentration range of the gelling agent in the gel composition of the invention is 0.2 to 5 %, preferably 0.6 to 2 % (based on the total weight of the composition).

The gelling agents may be only iota-carrageenan and xanthan, or may comprise iota-carrageenan, xanthan and other agents. In the case where only iota-carrageenan and xanthan are present, the ratio of iota-carrageenan to xanthan is preferably in the range of 10:90 to 90:10, and is preferably in the range of 70:30 to 30:70, more preferably 50:50 to 60:40, but may also be any other suitable ratio including, for example, 20:80, 40:60 or 80:20.

In addition to xanthan and iota-carrageenan, starch can be added as a thickening or gelling agent, either in native or modified form. In addition to xanthan and iota-carrageenan, other carrageenan types may be added, especially kappa and lambda carrageenans.

The amount of water in the gel composition is in the range 30 % to 70 %, preferably 40 % to 60 %, more preferably 45 % to 60 %.

The amount of flavorings in the gel composition is in the range 1 to 40 %, preferably 5 to 15 %.

The composition according to the invention may further comprise fat in an amount of 1 to 10 %, such as, for example, emulsified or dispersed oil and/or fat. Further, the composition can comprise up to 40 % of maltodextrins and/or glucose syrup.

The invention further relates to a process for preparing the gel composition of the invention.

The process comprises the steps of heating water, adding the ingredients to the water and applying at least one additional heating step to the mixture during the process of adding the ingredients.

In particular, the process preferably comprises the steps of heating water to 50 °C and making a premix of the hydrocolloids with glucose syrup or maltodextrins. The premix containing the hydrocolloids is added to water under mixing and heated at a temperature of around 80 °C to properly hydrate the gums. Additional dry ingredients premixed prior to addition, including salt, flavourings and the like, are added. Finally, the fat component is added and the complete composition is heated and pasteurized. The composition may then be filled into suitable containers, and left for cooling at room temperature. The containers and consequently the cooled composition can have any possible shape, preferably the shape of a cube, pellet, sphere, egg-shape or the like.

The resulting product is a gel composition being stable at room temperature and melting when reheated to temperatures above 75°C and dissolving when added to boiling water in less than 2 minutes, with or without an additional heating step.

The invention further relates to the use of a gel composition for preparing a food product, such as a soup, sauce, bouillon, stock, soup base or gravy, by melting or diluting the composition in hot or boiling water. Typically, the amount of gel composition used would be 25-50 g/L of water, or 25-50 g/kg of, for example, rice or vegetables, if being used directly with solid foods rather than addition to water.

The product of the invention has several advantages over known gel compositions. One advantage is that the gelling process during and after cooling is very slow. Typically it takes a few hours until the gel is properly formed. In contrast, known gel compositions form a gel as soon as the temperature is below 60-50 °C, which can lead to an undesired texture during consumption of the product. If the time between the food product preparation using the gel composition and consumption is too long, the soup or sauce may develop an undesirable gel texture again. The gel composition of the invention enables a non-gelled texture to be maintained for product consumption. Further, slow gelling enables the gel composition to be more easily processed, avoiding fast gelling in processing equipment.

Another advantage is that the gel strength is stable or even increases when salt content increases which enables a very consistent product to be produced even if some variations in the process are encountered (for example, water evaporation during the heating step).

### EXAMPLES

The invention is further described with reference to the following examples. It will be appreciated that the invention as claimed is not intended to be limited in any way by these examples.

### Example 1: gel with iota-carrageenan and xanthan

| **Ingredient** | **Amount [%]** |
|---|---|
| Water | 51 |
| Salt | 21 |
| Glucose syrup | 15.2 |
| Chicken fat | 5.6 |
| Iota-carrageenan | 0.45 |
| Xanthan | 0.45 |
| Other ingredients | up to 100 |

Syneresis is measured as the amount of separated water divided by the amount of separated water + gel weight. Rupture strength was measured using a Texture Analyser TAXT2 (Microstable systems) according to the following conditions:
- Load cell: 5 kg.
- Penetration test using a cylindrical probe of 1 inch radius.
- The sample was loaded just after heating into a container of 50 mm diameter, until reaching a height of 55 mm. The sample was allowed to cool and gel at ambient temperature for one day. Before measurement, the sample is placed in a water-bath at 20 °C for temperature equilibration.
- Test conditions: pre-test speed: 1 mm/s, test speed: 0.5 mm/s, post speed: 10 mm/s. Measurement was stopped at 25 mm penetration depth.
- The rupture strength is recorded at the peak of the curve force versus penetration depth.

The resulting product was a gel with a rupture strength of 60 g, which dissolves when added to hot water in approximately 75 sec and shows less than 5 % syneresis after 2 months.

The same gel produced with 0.9 % iota-carrageenan and no xanthan was found to have a rupture strength of 220 g, a melting point of 95-100°C, a dissolution time in boiling water of around 2 minutes, and a syneresis of 7.5 % only after 2 days.

### Example 2: gel with iota-carrageenan and xanthan

| **Ingredient** | **Amount [%]** |
|---|---|
| Water | 60 |
| Salt | 20 |
| Glucose syrup | 0 |
| Sunflower oil | 0.7 |
| Iota-carrageenan | 0.6 |
| Xanthan | 0.6 |
| Other ingredients | up to 100 |

### Example 3: gel with iota-carrageenan, xanthan and starch

| **Ingredient** | **Amount [%]** |
|---|---|
| Water | 51 |
| Salt | 25 |
| Glucose syrup | 10 |
| oil | 5.6 |
| Iota-carrageenan | 0.2 |
| Xanthan | 0.4 |
| Starch | 5 |
| Other ingredients | up to 100 |

### Example 4: gel with iota-carrageenan, xanthan and MSG

| **Ingredient** | **Amount [%]** |
|---|---|
| Water | 53 |
| Salt | 16 |
| MSG | 7.6 |
| I+G | 0.2 |
| Sugar | 4 |
| oil | 7 |

| | |
|---|---|
| Iota-carrageenan | 0.6 |
| Xanthan | 0.4 |
| Starch | 0.4 |
| Other ingredients | up to 100 |

### Example 5: process

The general procedure for preparing gel compositions of the above examples is as follows:
- add water into a mixing vessel
- add gelling agents (preferably premixed with maltodextrin or glucose syrup)
- mix until a homogeneous composition is obtained and heat to a temperature of 80 °C
- add all remaining ingredients into the vessel
- mix and homogenize until no lumps are visible
- heat at a temperature of 80 °C and pasteurize
- fill a suitable container and close
- allow to cool to room temperature

It is to be appreciated that although the invention has been described with reference to specific embodiments, variations and modifications may be made without departing from the scope of the invention as defined in the claims. Furthermore, where known equivalents exist to specific features, such equivalents are incorporated as if specifically referred to in this specification.

## Claims

1. A composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.2 to 5 % (by weight of the total composition), wherein the gelling agents comprise at least iota-carrageenan and xanthan.

2. A composition as claimed in claim 1, wherein the amount of gelling agents is 0.6 to 2 % (by weight of the total composition).

3. A composition as claimed in claim 1 or claim 2, wherein the ratio of iota-carrageenan and xanthan is in the range of 70:30 to 30:70, preferably in the range 50:50 to 60:40.

4. A composition as claimed in any one of claims 1 to 3, wherein the gelling agents further comprise starch or another carrageenan type.

5. A composition as claimed in any one of claims 1 to 4, further comprising fat in the amount of 1 to 10 % (by weight of the total composition).

6. A composition as claimed in any one of claims 1 to 5, further comprising maltodextrin or glucose syrup in the amount of up to 40 % (by weight of the total composition).

7. A composition as claimed in any one of claims 1 to 6, wherein the amount of water is in the range 40 to 60 %, preferably 45 to 60 %.

8. A composition as claimed in any one of claims 1 to 8, wherein the amount of flavorings is in the range 1 to 30%, preferably 5 to 15%.

9. A composition in the form of a gel for preparing a food product, the composition comprising iota-carrageenan and xanthan, wherein the composition is adapted to melt when reheated to a temperature above 75 °C and dissolve when added to boiling water in less than 2 minutes.

10. A composition as claimed in any one of claims 1 to 9 which is heat reversible.

11. A composition as claimed in any one of claims 1 to 10, wherein the food product is a sauce, soup, stock, bouillon, soup base or gravy.

12. A process for preparing a composition in the form of a gel for preparing a food product comprising the steps:
a) heating water,
b) adding gelling agents including at least iota-carrageenan and xanthan, and mixing,
c) heating to a temperature of at least 70 °C, preferably at least 80 °C,
d) adding salt and flavourings, and mixing,
e) heating at a temperature of at least 75 °C, preferably at least 80 °C, to pasteurize, and
f) cooling to room temperature to form the gel.

13. A process as claimed in claim 12, further comprising making a premix of the gelling agents with maltodextrin and/or glucose syrup and/or starch.

14. A process as claimed in claim 12 or claim 13, further comprising adding fat after mixing of the gelling agents.

15. The use of a composition as claimed in any one of claims 1 to 11 for preparing a food product.
